# FASCICULE DE BREVET EUROPEEN

(11) **EP 2 553 439 B1**
(45) Date de publication et mention de la délivrance du brevet: **14.08.2019**
(21) Numéro de dépôt: 11717302.1
(22) Date de dépôt: 28.03.2011
(51) Int. Cl.: G01N 21/958, G01N 21/896

(54) **PROCEDE ET DISPOSITIF D'ANALYSE DE LA QUALITE OPTIQUE D'UN SUBSTRAT TRANSPARENT**
VERFAHREN UND VORRICHTUNG ZUR ANALYSE DER OPTISCHEN QUALITÄT EINES DURCHSICHTIGEN SUBSTRATS
METHOD AND DEVICE FOR THE ANALYSIS OF THE OPTICAL QUALITY OF A TRANSPARENT SUBSTRATE

(30) Priorité: 01.04.2010 FR 1052477
(43) Date de publication de la demande: 06.02.2013
(73) Titulaire: Saint-Gobain Glass France, 92400 Courbevoie (FR)
(72) Inventeur: PICHON, Michel, F-60270 Gouvieux (FR); DAVENNE, Franc, F-60150 Thourotte (FR)
(74) Mandataire: Saint-Gobain Recherche
(86) Numéro de dépôt international: PCT/FR2011/050675
(87) Numéro de publication internationale: WO 2011/121219

(56) Documents cités:
- WO-A1-2010/016137
- FR-A1- 2 898 969
- JP-A- H10 111 252
- JP-A- S61 176 839
- US-A- 5 175 601
- US-A1- 2006 158 664

## Description

L'invention concerne un dispositif d'analyse de la qualité optique d'un substrat transparent, permettant notamment la détection de défauts optiques déformants présents soit à la surface de ce substrat, soit dans sa masse.

Les défauts optiques des substrats transparents sont caractérisés par les déformations optiques qu'ils provoquent lorsque ces substrats sont en situation d'utilisation, comme par exemple les vitrages automobiles, les vitrages bâtiment, les écrans plasma ou LCD, ...

La détection des défauts optiques de ces substrats en fin de chaîne de fabrication, si elle peut s'avérer efficace en termes de contrôle qualité, est souvent très coûteuse, car elle est réalisée sur un produit fini, prêt à l'expédition. Il est nettement préférable de détecter ces défauts le plus tôt possible, c'est-à-dire, lors du formage du substrat qui servira à la réalisation du produit fini.

Ces substrats étant souvent produits à partir de procédés d'étirage ou d'extrusion sous forme de ruban continu, il faut disposer d'un outil de contrôle qui s'adapte à cet outil, sur ligne industrielle, sur ruban continu, pour un contrôle exhaustif et sans nécessité de modification de la ligne de production.

Dans le cas d'un verre float formé par étirage, des défauts provoquant des déformations optiques apparaissent dans une seule direction, parallèle aux bords de feuille, et correspondent à la signature du processus de formage. L'Intensité de ces défauts étant plus ou moins importante selon la qualité du formage.

Les techniques habituellement utilisées pour détecter et évaluer les défauts consistent typiquement :
- soit à observer les défauts visuellement par des techniques d'ombroscopie sur ligne consistant à éclairer la feuille à l'aide d'une source lumineuse ponctuelle et puissante et à recueillir, après transmission au travers du substrat, le flux lumineux sur un écran. L'analyse visuelle de cette image permet la plupart du temps de détecter les défauts présentant un fort gradient, c'est-à-dire des défauts étroits et intenses qui fournissent une image suffisamment contrastée pour être observable, sans fournir d'information précise sur l'intensité de ces défauts. Un prélèvement est alors nécessaire.
- soit à prélever régulièrement un échantillon de verre de grandes dimensions et à l'analyser visuellement hors ligne,
- soit à prélever des échantillons de petites dimensions qui peuvent être mesurés à l'aide de dispositifs de mesure adéquats.

Ces techniques de contrôle sont peu efficaces, non exhaustives, imprécises, impliquent beaucoup le personnel et nuisent notamment aux coûts de production. Elles sont peu performantes dans le cas de défauts de moyenne ou de faible intensité. Les intensités mesurées sont rarement vérifiables.

Il existe par ailleurs, dans le commerce, des techniques de contrôle de substrat transparent, qui permettent de détecter des défauts optiques par des mesures en transmission fondées sur l'observation de mires régulières au travers du substrat.

Le document US 6 509 967 décrit une méthode de détection de défauts optiques fondée sur l'analyse des déformations d'une mire à deux dimensions observée en transmission. En cas de défauts, l'image de la mire est déformée, et la déformation d'une multitude de points de l'image est mesurée pour en déduire, après étalonnage préalable, la puissance optique selon deux directions, dont les valeurs sont représentatives de la présence ou non et de l'importance desdits défauts. Ce document insiste sur la nécessité d'un couplage étudié de la mire par rapport à la caméra chargée de l'acquisition des images en transmission. Chaque ligne de la mire doit correspondre exactement à un nombre entier de lignes de pixels de la caméra.

Cependant, la méthode de ce brevet américain impose de connaître ou d'adapter les caractéristiques de la mire (ses dimensions, ses formes, sa position) et de la caméra (nombre de pixels, distance à la mire, ...) pour assurer un alignement idoine du motif de la mire avec les pixels de la caméra, ce qui est contraignant, et rarement possible en milieu industriel (mauvaise régularité de la mire, dilatation de la mire en fonction des variations de température dans la journée, vibrations du sol, ...).

Le document US 6 208 412 propose une autre méthode de mesure par observation en transmission d'une mire à une dimension. Le dispositif de mesure de ce document utilise un projecteur pour générer une mire en formant, sur un écran de grandes dimensions, toujours sensiblement supérieures aux dimensions du vitrage à mesurer (typiquement 2 x 3 m), un motif périodique unidirectionnel variable dans le temps, ainsi qu'une caméra matricielle qui visualise la mire au travers du vitrage à analyser. La mire doit être en niveaux de gris progressifs, c'est-à-dire qu'elle ne doit pas présenter de contrastes locaux élevés.

Ce dispositif décrit dans ce dernier document, s'il peut donner satisfaction en laboratoire ou en bord de ligne de production pour un contrôle par prélèvement, ne peut par contre pas être utilisé pour un contrôle sur ligne, sur un ruban défilant en continu, dans le cadre d'un contrôle qui se doit d'être exhaustif sans possibilité d'arrêter le verre momentanément.

L'intégration d'un projecteur et d'un écran de grandes dimensions sur une ligne industrielle est également rarement possible ou souhaitable, par manque de place. Par ailleurs, l'image produite par un projecteur est en général peu lumineuse. Il est alors indispensable de protéger l'écran de la lumière parasite ambiante en le capotant largement et en peignant même le sol en noir.

Enfin, la méthode de mesure décrite est celle bien connue de « phase-shifting » qui consiste, avec l'arrêt du vitrage, à projeter successivement plusieurs mires, typiquement quatre, qui sont décalées dans l'espace, et à acquérir une image pour chaque position de mire. Cette série d'acquisitions est donc très consommatrice de temps et augmente d'autant plus le temps d'arrêt du vitrage. Ce mode de fonctionnement est incompatible avec une mesure sur un substrat en défilement permanent.

Par conséquent, le dispositif décrit dans US 6 208 412 et son processus de mesure sont incompatibles avec une mesure sur ligne industrielle, sur un substrat continu en défilement permanent, avec comme contrainte un contrôle exhaustif.

Les documents US 2006/158664 A1, JP S61 176839 A, JP H10 111252A et WO 2010/016137 A1 décrivent des différents dispositifs d'analyse d'une surface transparente.

Le demandeur s'est ainsi donné pour mission la conception d'un dispositif d'analyse de la qualité optique d'un substrat transparent, qui ne présente pas les inconvénients des techniques précédemment citées et qui permet de détecter et de quantifier les défauts de ce substrat en transmission, de façon aisée, précise, et répétitive en répondant à toutes les contraintes d'une mise en oeuvre sur une ligne industrielle pour un contrôle du verre sur l'ensemble de sa longueur, sur substrat en défilement continu ou non, et en assurant en particulier la réduction des coûts de contrôle de conformité du verre sur une ligne de production. Ce dispositif innovant doit permettre en outre d'utiliser des procédés de mesure qui conduisent à optimiser le temps d'analyse.

A cet effet, l'invention a pour objet un dispositif d'analyse d'une surface transparente d'un substrat selon la revendication 1, ledit dispositif comportant une mire formée sur un support disposé en regard de la surface du substrat à mesurer, une caméra pour prendre au moins une image de la mire déformée par le substrat mesuré, un système d'éclairage de la mire, et des moyens de traitement de l'image et d'analyse numérique qui sont reliés à la caméra, caractérisé en ce que le support est de forme oblongue de petite et grande extensions, la mire étant monodirectionnelle et constituée d'un motif qui s'étend selon la plus petite extension du support, le motif étant périodique transversalement à la petite extension, et en ce que la caméra est linéaire et positionnée pour acquérir une image linéaire en transmission de la mire à travers le substrat selon la grande extension du support.

Suivant des modes particuliers de réalisation, le dispositif comporte l'une ou plusieurs des caractéristiques suivantes, prise(s) isolément ou suivant toutes les combinaisons techniquement possibles :
- le rapport entre la grande extension du support et la petite extension du support est par exemple supérieur ou égal à 10, de préférence supérieur ou égal à 20 ;
- le motif comprend au moins une ligne qui présente, selon la petite extension du support, une largeur comprise entre 0,1 mm et 5 cm, de préférence entre 1 mm et 2 mm ;
- le motif se compose d'une succession alternative de lignes claires et foncées ;
- le support de la mire est constitué d'un panneau rétro-éclairé par le système d'éclairage ;
- le support est, au niveau de sa face en regard du vitrage à mesurer, translucide et diffusant tel qu'une plaque de plastique blanc ;
- le système d'éclairage est formé d'une multitude de diodes électroluminescentes ;
- le substrat est disposé entre la mire et la caméra pour une mesure en transmission ;
- le support de la mire est montée mobile par rapport au substrat perpendiculairement au plan de défilement du substrat ;
- le dispositif comprend un système mécanique de monte et baisse pour éloigner et rapprocher le support de la mire par rapport au substrat tout en conservant une netteté suffisante à l'image de la mire captée par la caméra ;
- le dispositif comprend une mémoire sur laquelle sont enregistrés des programmes adaptés pour :
   - prendre à l'aide de la caméra linéaire une image linéaire en transmission de la mire éclairée, le substrat ou la mire étant en déplacement l'un par rapport à l'autre selon un seul sens de défilement parallèle à la direction des défauts et aux lignes de la mire ;
   - (1) acquérir la ligne de pixels de l'image linéaire prise suivant la grande extension de la mire, sans déplacer la caméra par rapport à la mire ;
   - (2) appliquer un traitement numérique à la ligne de pixels acquise pour calculer une grandeur représentative, pour chaque pixel, de l'effet du substrat sur la lumière transmise par le substrat, par exemple la puissance optique de chaque pixel ;
   - (3) mémoriser les valeurs de cette grandeur pour chaque pixel de la ligne et afficher une image de la ligne de pixels dans laquelle la couleur de chaque pixel est représentative de cette grandeur ;
   - répéter le cycle d'acquisition-traitement-affichage (1)(2)(3) plusieurs fois de manière périodique et empiler les images des lignes de pixels afin de reconstituer l'image d'une partie du substrat ;
   - analyser par traitement numérique l'image reconstituée pour en déduire la position des défauts et quantifier leur gravité.
- la période d'acquisition des lignes est supérieure à la durée d'acquisition de chaque ligne, par exemple de 0,1 seconde ou plus ;
- chaque ligne est affichée après chaque étape (2) pour que l'image reconstituée d'une partie du substrat simule un effet de défilement continu qui correspondra à l'affichage en temps réel d'une cartographie 2D des défauts ;
- le substrat est un ruban de verre continu.

On rappelle qu'une caméra linéaire comprend un seul capteur vidéo fournissant en signal de sortie une seule ligne de pixels. Le capteur comprend un seul récepteur composé de plusieurs éléments sensibles juxtaposés correspondant respectivement aux pixels du signal de sortie, les éléments sensibles étant alignés sur une seule ligne. Les caméras linéaires sont peu encombrantes et réalisent une acquisition rapide.

La forme oblongue du support de la mire accompagnée de l'utilisation d'une caméra linéaire permet très avantageusement de réduire la zone occupée par la mire et de limiter ainsi l'emplacement nécessaire au dispositif sur une ligne de production.

La grandeur des motifs de la mire et la position de la mire, du verre et de la caméra sont bien entendu à adapter à chaque type de mesure, ce dispositif pouvant s'adapter au contrôle d'échantillons de quelques centimètres de large comme au contrôle d'un ruban de verre de plusieurs mètres de large en défilement permanent. Dans ce dernier cas on associera plusieurs systèmes caméra-mire pour couvrir la totalité de la largeur du ruban à analyser. Pour des substrats plus petits, la grande extension du support pourra correspondre à la largeur du substrat à mesurer.

Le rapport entre la grande extension du support et la petite extension du support est par exemple supérieur ou égal à 10, de préférence supérieur ou égal à 20.

On sait également que les déformations perçues exprimées en termes de grandissement optique par un observateur fixe placé d'un côté du substrat observé en transmission varient avec la distance séparant le substrat de la mire qui joue le rôle d'objet optiquement parlant. A noter que la puissance optique est de manière connue définie comme l'inverse de la distance focale de la lentille optique équivalente qui donnerait, si elle était positionnée à la place du défaut, le même grandissement que celui perçu par l'observateur.

Ainsi pour adapter la sensibilité du dispositif, c'est-à-dire pour augmenter ou réduire l'effet déformant d'un défaut optique donné, on peut modifier la distance séparant la mire de ce défaut, donc du substrat. Cet effet peut être réalisé à l'aide d'un système mécanique de monte et baisse qui éloignera ou rapprochera la mire du substrat tout en conservant une netteté suffisante à l'image de la mire captée par la caméra. Notre dispositif n'exigeant pas une mise au point en profondeur très précise de la caméra sur la mire, on peut aisément doubler la sensibilité de ce dispositif en augmentant la distance mire substrat d'environ un facteur 2. Il est alors possible de reconfigurer rapidement, sans réaliser de nouveau réglages optiques, le dispositif afin qu'il s'adapte à une nouvelle gamme de défauts caractérisée par des puissances optiques différentes.

Selon une caractéristique, le motif de la mire se compose d'une succession alternative de lignes claires et foncées, de préférence fortement contrastées (par exemple blanches et noires) et respectivement de largeurs égales. La largeur des lignes formant chaque motif est en fait adaptée aux conditions de mesures et de largeur des défauts. La largeur des lignes peut être ainsi entre 0,1 mm et 10 mm, de préférence entre 1 mm et 2 mm.

En outre, si le système d'éclairage est associé directement à la mire tel que par rétro-éclairage, le panneau support de la mire peut alors ne pas excéder 5 cm de large, ce qui réduit donc considérablement les dimensions utiles à l'implantation du dispositif de l'invention par rapport à ceux existant.

En tant que panneau retro-éclairé, le panneau est, au niveau de sa face en regard du substrat à mesurer, translucide et diffusant. Il s'agit par exemple d'une plaque de plastique blanc. Il peut aussi s'agir d'un substrat transparent sur lequel est imprimée la mire. Dans ce cas une seconde plaque translucide associée à l'éclairage assurera le fond lumineux nécessaire à un rétro-éclairage à peu près homogène de la mire bien que cette homogénéité ne soit pas critique.

Avantageusement, et en particulier dans le cas d'un rétro-éclairage, le système d'éclairage est formé d'une multitude de diodes électroluminescentes. Cet éclairage peut-être judicieusement modulé en intensité dans le temps afin, par exemple, d'en augmenter la durée de vie ou pour l'adapter à la transmission d'un substrat plus ou moins absorbant.

Pour assurer une mesure en transmission, le substrat est disposé entre la mire et la caméra.

L'invention a également trait à un procédé d'analyse d'une surface transparente ou spéculaire d'un substrat à l'aide d'un dispositif comportant une mire formée sur un support de forme oblongue de petite et grande extensions, une caméra linéaire pour prendre au moins une image de la mire déformée par le substrat mesuré, un système d'éclairage de la mire, et des moyens de traitement de l'image et d'analyse numérique qui sont reliés à la caméra, le procédé comprenant des étapes consistant à :
- prendre à l'aide de la caméra linéaire une image linéaire en transmission de la mire éclairée, le substrat ou la mire étant en déplacement l'un par rapport à l'autre selon un seul sens de défilement parallèle à la direction des défauts et aux lignes de la mire ;
- (1) acquérir la ligne de pixels de l'image linéaire prise suivant la grande extension de la mire, sans déplacer la caméra par rapport à la mire ;
- (2) appliquer un traitement numérique à la ligne de pixels acquise pour calculer une grandeur représentative, pour chaque pixel, de l'effet du substrat sur la lumière transmise par le substrat, par exemple la puissance optique de chaque pixel ;
- (3) mémoriser les valeurs de cette grandeur pour chaque pixel de la ligne et afficher une image de la ligne de pixels dans laquelle la couleur de chaque pixel est représentative de cette grandeur ;
- répéter le cycle d'acquisition-traitement-affichage (1)(2)(3) plusieurs fois de manière périodique et empiler les images des lignes de pixels afin de reconstituer l'image d'une partie du substrat;
- analyser par traitement numérique l'image reconstituée pour en déduire la position des défauts et quantifier leur gravité.

Suivant des modes particuliers de réalisation, le procédé présente en outre l'un ou plusieurs des caractéristiques suivantes, prise(s) isolément ou suivant l'une quelconque des combinaisons techniquement possibles :
- chaque ligne est affichée après chaque étape (2) pour que l'image reconstituée d'une partie du substrat simule un effet de défilement continu qui correspondra à l'affichage en temps réel d'une cartographie 2D des défauts ;
- le substrat est un ruban de verre continu ;
- la période d'acquisition des lignes est supérieure à la durée d'acquisition de chaque ligne, par exemple de 0,1 seconde ou plus.

La cadence des prises de vue de chaque ligne sera asservie à la vitesse de déplacement relative du substrat par rapport à la mire pour empêcher tout recouvrement, dans le sens du défilement, d'une image d'une ligne de pixels avec la suivante. Pour un gain de temps, on pourra accepter que le temps d'acquisition d'une ligne soit plus court que son temps de traitement, ce qui aura pour effet de ne pas enregistrer une fraction connue du substrat.

L'analyse ne concernera alors que les défauts d'une durée de passage sous la caméra de l'ordre de la seconde, les défauts ponctuels, d'une durée de passage typiquement du dixième de seconde ne seront détectés que de manière aléatoire.

De cette façon, grâce au dispositif et au procédé selon l'invention, il est possible d'effecteur un contrôle rapide et fiable sur un échantillon représentatif de lignes régulièrement espacées du substrat. La totalité du substrat peut ainsi être contrôlée rapidement, même si les espaces entre les lignes ne le sont pas. S'il devait être nécessaire de contrôler également les espaces entre les lignes analysées, il serait avantageux de multiplier le dispositif en plaçant un ou plusieurs dispositifs identiques en aval, tous synchronisés pour analyser une partie différente du substrat, c'est-à-dire les espaces entre les lignes analysées par les autres dispositifs, tous les dispositifs étant de préférence synchronisés sur la même périodicité d'acquisition d'image.

Le traitement numérique de chaque ligne est effectué de manière connue. Il s'agit par exemple d'extraire des phases locales de la ligne de pixels acquise à l'aide de la caméra linéaire et d'en déduire des variations de phases , pour en déduire la position du défaut mais également les quantifier par une mesure de la déformation des lignes de la mire à partir de laquelle on peut fournir, grâce à un modèle optique de calcul, une grandeur dimensionnée de la déformation ou une puissance optique représentative du défaut.

A noter que le traitement numérique d'extraction des phases peut être réalisé grâce à la méthode bien connue par ailleurs de transformée de Fourier.

Il apparaît que le procédé selon l'invention conduit à des résultats satisfaisants sur lignes industrielles sans modification de celles-ci, pour des coûts réduits et autorise un contrôle beaucoup plus rapide que dans l'art antérieur.

Le dispositif de l'invention et le procédé de mise en oeuvre peuvent être appliqués à des substrats transparents tels que des vitrages monolithiques ou feuilletés, plans ou bombés, de toutes dimensions pour diverses utilisations (bâtiment, automobile, aéronautique, ferroviaire). En particulier le dispositif et le procédé peuvent être appliqués de façon avantageuse au ruban de verre plat sur ligne float. Ils peuvent également être appliqués à des vitrages plans destinés aux applications bâtiment ou aux vitrages spéciaux destinés aux applications électronique (écrans plasma ou LCD, ...) et à tout autre substrat transparent.

La présente invention est maintenant décrite à l'aide d'exemples uniquement illustratifs et nullement limitatifs de la portée de l'invention, et à partir des illustrations ci-jointes, dans lesquelles :
- la figure 1 représente une vue schématique en coupe d'un dispositif d'analyse selon l'invention pour une mesure en transmission ;
- la figure 2 illustre un exemple de mire selon l'invention ; et
- la figure 3 illustre une image reconstituée du substrat faisant apparaître en son centre un défaut.

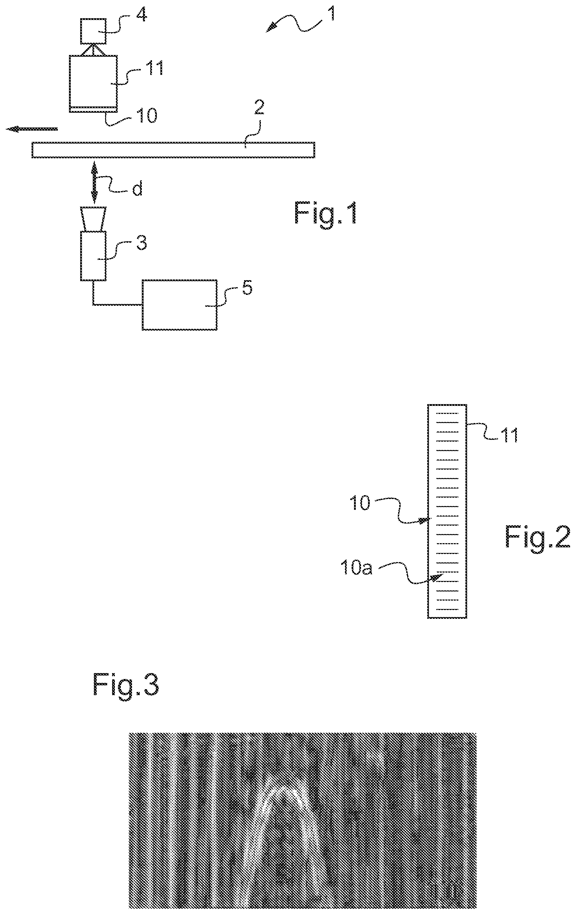

Les figures 1 et 2 ne sont pas à l'échelle pour en faciliter la lecture.

Le système d'éclairage 4 peut être un système de rétro-éclairage lorsque le panneau support 11 est translucide, tel qu'une plaque de plastique blanc. De préférence, le système d'éclairage 4 est alors constitué d'une multitude de diodes électroluminescentes qui sont disposées à l'arrière du panneau translucide.

En variante, lorsque le panneau support 11 est opaque, le système d'éclairage 4 est formé d'une source de lumière agencée sur le devant de la mire, par exemple un spot orienté pour éclairer la face avant du panneau support de la mire.

La caméra 3 est linéaire ; elle génère une trame de prises de vue qui, par traitement numérique, est empilée avec les précédentes pour former une image globale en deux dimensions du substrat en défilement. La mire étant de petites dimensions par rapport au substrat comme nous le verrons, le substrat 2 ou la mire est apte à défiler en translation l'un par rapport à l'autre pour assurer le nombre nécessaire de prises de vue sur l'ensemble du substrat. La fréquence de déclenchement de la caméra pour chaque prise de vue est asservie à la vitesse de défilement.

La caméra est positionnée à une distance d adaptée de manière à visualiser l'ensemble ou une fraction de l'extension du substrat qui est transversale à la direction de défilement du substrat ou de la mire. Ainsi, si le défilement se fait dans un plan horizontal, la caméra est agencée verticalement.

La caméra 3 pourrait faire un angle par rapport à la verticale qui serait adapté aux conditions d'implantation sur la ligne industrielle.

La mire 10, telle qu'illustrée sur la figure 2, est formée sur un support 11 de forme oblongue. Elle est monodirectionnelle et constituée d'un motif 10a.

La mire selon l'invention a une petite extension de faible dimension par rapport au substrat à mesurer. Par exemple pour mesurer un substrat continu de 0,80 m de large, la mire s'étend sur 5 cm par 1,0 m.

Le motif 10a de la mire s'étend selon la plus petite extension du support, en étant périodique transversalement à la petite extension, c'est-à-dire selon la grande extension du support.

Le motif 10a se compose d'une succession alternative de lignes claires et foncées nettement contrastées.

Les moyens de traitement et de calcul 5 sont connectés à la caméra pour élaborer les traitements et analyses mathématiques qui suivent les prises de vue successives.

La figure 3 illustre une image enregistrée par la caméra, l'image de la mire étant déformée par la présence de défauts dans une direction. La mise en oeuvre du dispositif consiste à :
- prendre à l'aide de la caméra une image linéaire en transmission de la mire éclairée, le substrat ou la mire étant en déplacement l'un par rapport à l'autre selon un seul sens de défilement parallèle à la direction des défauts et aux lignes de la mire,
- (1) acquérir la ligne de pixels de l'image linéaire prise suivant la grande extension de la mire, sans déplacer la caméra par rapport à la mire,
- (2) appliquer un traitement numérique à la ligne de pixels acquise pour calculer une grandeur représentative, pour chaque pixel, de l'effet du substrat sur la lumière transmise par le substrat, par exemple la puissance optique de chaque pixel,
- (3) afficher une image de la ligne de pixels dans laquelle la couleur de chaque pixel est représentative de la puissance optique du pixel,
- répéter le cycle d'acquisition-traitement-affichage (1)(2)(3) plusieurs fois de manière périodique et empiler les images des lignes de pixels afin de reconstituer l'image d'une partie du substrat en simulant un effet de défilement continu qui correspondra à l'affichage en temps réel d'une cartographie 2D des défauts ;
- analyser par traitement numérique l'image reconstituée pour en déduire la position des défauts et quantifier leur gravité.

L'acquisition d'une série de n lignes de pixels lors du défilement du substrat devant la mire permet de reconstituer, par simple empilement de lignes, une image unique en deux dimensions. Le demandeur met en évidence que ce type de mire est particulièrement intéressante de par son encombrement limité et des performances de détection de défaut sur ruban continu obtenues avec le dispositif.

On peut calculer pour chaque ligne acquise l'intensité des défauts optiques. Il n'est pas nécessaire, avec ce procédé, de connaître l'état de la ligne précédente, ni celui de la suivante.

Par contre, pour analyser la gravité d'un défaut il faut le voir dans sa totalité et donc utiliser une image constituée de nombreuses lignes (un défaut peut durer plusieurs minutes, voir plusieurs heures). Chaque ligne est donc « convertie » en puissance optique et la cartographie en 2D de cette puissance optique subit un traitement d'image pour analyser la gravité des défauts. En résumé, la ligne subit un traitement du signal, la cartographie un traitement d'image, ce qui est particulièrement avantageux. Le traitement d'image le plus simple est un simple seuillage.

Une mire est un signal spatialement périodique. L'analyse mathématique consiste de manière connue à caractériser ce signal par sa phase locale modulo 2π, au niveau d'un pixel de la caméra, et on définit ainsi une cartographie en deux dimensions des phases (correspondant à l'ensemble des pixels) de l'image en deux dimensions vues par transmission, appelée carte des phases.

Cette extraction de la carte de phases modulo 2π peut être obtenue selon la technique de l'analyse par transformée de Fourier suivante bien connue.

Cette méthode est couramment décrite dans la littérature. Elle se décompose ainsi :
- acquisition d'une image linéaire de la mire déformée par l'échantillon;
- calcul de la transformée de Fourier de la ligne de pixels (transformée en une dimension) ;
- recherche automatique du pic caractéristique de la fréquence fondamentale f₀ de la mire ;
- filtrage passe-bande à l'aide d'un filtre passe-bande gaussien ou autre, de cette fréquence fondamentale f₀. Ce filtrage a pour effet d'éliminer le fond continu de l'image de la mire et les harmoniques du signal de la mire;
- décalage du spectre filtré de f₀ afin de ramener le pic caractéristique de la mire image à la fréquence 0. Ce décalage fait disparaître la trame de la mire et ne fait subsister que les déformations de la mire ;
- calcul de la transformée de Fourier inverse de l'image, colonne par colonne de pixels. L'image obtenue fait apparaître les déformations seules. Cette image est une image complexe comprenant une partie réelle R et une partie imaginaire I;
- calcul de la phase locale au niveau d'un pixel, modulo 2π, de l'image. Cette phase est obtenue en calculant, pixel par pixel, la valeur de arctg(I / R) .

Une fois l'étape de calcul de la phase modulo 2π de l'image effectuée pour chaque pixel, on en déduit aisément la carte des dérivées de la phase, appelée encore carte des gradients. Ce calcul du gradient de phase de l'image est obtenu par simple différence de la phase pixel à pixel, les sauts de phase de 2π étant facilement éliminés. Ce calcul peut être mené après l'acquisition de chacune des lignes ou bien sur un groupe de lignes.

Après déduction de la carte des phases de l'image complète reconstituée à partir de la série d'images linéaires prises par la caméra, il est alors possible de relier la valeur de la dérivée de la phase en chaque point de l'image à la puissance optique Pi des défauts du vitrage à l'origine de ces variations de phase locale à l'aide d'un modèle de calcul optique qui permet de calculer la puissance optique Pi à partir de la dérivée de cette phase. L'évaluation de la puissance optique et sa comparaison à une valeur de seuil permet de quantifier le défaut.

En variante, la dérivée des phases pourra plutôt être comparée à une largeur locale d'étalonnage qui fournira une largeur de déformation représentative également de l'ampleur du défaut.

La quantification du défaut permet ainsi d'établir la qualité optique d'un substrat directement sur ligne de production.

Par conséquent, le procédé selon l'invention d'analyse du substrat consiste :
- à prendre à l'aide d'une caméra linéaire une série d'images linéaires en transmission d'une mire unique étroite sur ledit substrat, sans la nécessité, comme dans l'art antérieur, d'un couplage étudié de la mire par rapport à la caméra ou de l'utilisation d'un projecteur et d'un écran de grandes dimensions ;
- à extraire par traitement numérique des phases locales, à calculer la dérivée de ces phases, et déduire par calcul mathématique le profil en intensité des défauts (de préférence selon un calcul de la puissance optique et sa comparaison à une valeur de seuil) ;
- à empiler verticalement ces profils sur un écran afin de reconstituer, ligne par ligne, une image de la cartographie des défauts du substrat ;
- à procéder à une analyse de cette cartographie afin d'y détecter automatiquement la présence de défauts situés au-delà des limites tolérées en utilisant des techniques de traitement d'image classiques comme la détection de bords ou le seuillage dynamique.

Enfin, le dispositif de mesure proposé autorise un contrôle sur toute la longueur des substrats présents sur une ligne industrielle, sans prélèvement du substrat, sans arrêt ni ralentissement du substrat, sans modification de sa position sur le système de convoyage, sans utilisation d'un système de projection de mires successives, sans aucune contrainte de réglage optique ou mécanique. Il engendre une aire d'utilisation réduite par rapport à des dimensions de la mire qui sont bien inférieures à celles existantes ; typiquement le panneau support de la mire de l'invention est de 1 mètre de long par 5 cm de large.

## Revendications

1. Dispositif d'analyse (1) d'une surface transparente d'un substrat (2) transparent comportant une mire (10) formée sur un support (11) disposé en regard de la surface du substrat à mesurer, une caméra (3) pour prendre au moins une image de la mire déformée par le substrat mesuré, un système d'éclairage (4) de la mire, et des moyens de traitement (5) de l'image et d'analyse numérique qui sont reliés à la caméra (3), le support (11) étant de forme oblongue de petite et grande extensions, la mire étant monodirectionnelle et constituée d'un motif (10) qui s'étend selon la plus petite extension du support, le motif (10) étant périodique transversalement à la petite extension, **caractérisé en ce que** la caméra est linéaire et positionnée pour acquérir une image linéaire en transmission de la mire à travers le substrat selon la grande extension du support (11)
et **en ce que** le support (11) de la mire (10) est monté mobile par rapport au substrat (2) perpendiculairement au plan de défilement du substrat (2),
et **en ce que** le dispositif comprend un système mécanique de monte et baisse pour éloigner et rapprocher le support de la mire par rapport au substrat tout en conservant une netteté suffisante à l'image de la mire captée par la caméra.

2. Dispositif (1) selon la revendication 1, dans lequel le rapport entre la grande extension du support (11) et la petite extension du support (11) est supérieur ou égal à 10, de préférence supérieur ou égal à 20.

3. Dispositif (1) selon la revendication 1 ou 2, dans lequel le motif (10) comprend au moins une ligne qui présente, selon la petite extension du support (11), une largeur comprise entre 0,1 mm et 5 cm, de préférence entre 1 mm et 2 mm.

4. Dispositif (1) selon l'une quelconque des revendications précédentes, dans lequel le motif se compose d'une succession alternative de lignes claires et foncées.

5. Dispositif (1) selon l'une quelconque des revendications précédentes, dans lequel le support (11) de la mire est constitué d'un panneau rétro-éclairé par le système d'éclairage (4).

6. Dispositif (1) selon la revendication 5, dans lequel le support (11) est, au niveau de sa face en regard du substrat transparent qui est un vitrage à mesurer, translucide et diffusant tel qu'une plaque de plastique blanc.

7. Dispositif (1) selon l'une quelconque des revendications précédentes, dans lequel le substrat (2) est disposé entre la mire (10) et la caméra (3) pour une mesure en transmission.

8. Dispositif (1) selon l'une quelconque des revendications précédentes, comprenant une mémoire sur laquelle sont enregistrés des programmes adaptés pour :
- prendre à l'aide de la caméra linéaire une image linéaire en transmission de la mire éclairée, le substrat ou la mire étant en déplacement l'un par rapport à l'autre selon un seul sens de défilement parallèle à la direction des défauts et aux lignes de la mire ;
- (1) acquérir la ligne de pixels de l'image linéaire prise suivant la grande extension de la mire, sans déplacer la caméra par rapport à la mire ;
- (2) appliquer un traitement numérique à la ligne de pixels acquise pour calculer une grandeur représentative, pour chaque pixel, de l'effet du substrat sur la lumière transmise par le substrat, par exemple la puissance optique de chaque pixel ;
- (3) mémoriser les valeurs de cette grandeur pour chaque pixel de la ligne et afficher une image de la ligne de pixels dans laquelle la couleur de chaque pixel est représentative de cette grandeur ;
- répéter le cycle d'acquisition-traitement-affichage (1)(2)(3) plusieurs fois de manière périodique et empiler les images des lignes de pixels afin de reconstituer l'image d'une partie du substrat ;
- analyser par traitement numérique l'image reconstituée pour en déduire la position des défauts et quantifier leur gravité.

9. Dispositif selon la revendication 8, **caractérisé en ce que** la période d'acquisition des lignes est supérieure à la durée d'acquisition de chaque ligne, par exemple de 0,1 seconde ou plus.

## Patentansprüche

1. Vorrichtung zur Analyse (1) einer durchsichtigen Fläche eines durchsichtigen Substrats (2), umfassend ein Prüfbild (10), das auf einem Träger (11) gebildet ist, der gegenüber der Fläche des zu messenden Substrats angeordnet ist, eine Kamera (3), um mindestens ein Bild von dem Prüfbild, verformt vom gemessenen Substrat, aufzunehmen, ein System zur Beleuchtung (4) des Prüfbilds und Mittel zur Verarbeitung (5) des Bilds und zur digitalen Analyse, die mit der Kamera (3) verbunden sind, wobei der Träger (11) eine längliche Form mit kleiner und großer Ausdehnung aufweist, wobei das Prüfbild eindirektional ist und aus einem Muster (10) besteht, das sich entlang der kleinsten Ausdehnung des Trägers erstreckt, wobei das Muster (10) periodisch quer zur kleinen Ausdehnung ist,
**dadurch gekennzeichnet, dass** die Kamera linear und positioniert ist, um ein lineares Bild durch Übertragung des Prüfbilds durch das Substrat gemäß der großen Ausdehnung des Trägers (11) zu erfassen,
und dadurch, dass der Träger (11) des Prüfbilds (10) beweglich in Bezug auf das Substrat (2) senkrecht zur Laufebene des Substrats (2) angebracht ist,
und dadurch, dass die Vorrichtung ein mechanisches System zum Heben und Senken umfasst, um den Träger des Prüfbilds in Bezug auf das Substrat zu beabstanden und anzunähern, bei gleichzeitiger Beibehaltung einer ausreichenden Schärfe des von der Kamera aufgenommenen Bilds des Prüfbilds.

2. Vorrichtung (1) nach Anspruch 1, wobei das Verhältnis zwischen der großen Ausdehnung des Trägers (11) und der kleinen Ausdehnung des Trägers (11) größer oder gleich 10 ist, vorzugsweise größer oder gleich 20.

3. Vorrichtung (1) nach Anspruch 1 oder 2, wobei das Muster (10) mindestens eine Linie umfasst, die gemäß der kleinen Ausdehnung des Trägers (11) eine Breite zwischen 0,1 mm und 5 cm, vorzugsweise zwischen 1 mm und 2 mm aufweist.

4. Vorrichtung (1) nach einem der vorhergehenden Ansprüche, wobei sich das Muster aus einer alternativen Aufeinanderfolge von hellen und dunklen Linien zusammensetzt.

5. Vorrichtung (1) nach einem der vorhergehenden Ansprüche, wobei der Träger (11) des Prüfbilds aus einer von dem Beleuchtungssystem (4) hintergrundbeleuchteten Tafel besteht.

6. Vorrichtung (1) nach Anspruch 5, wobei der Träger (11) im Bereich seiner Fläche gegenüber dem transparenten Substrat, das eine zu messende Verglasung ist, lichtdurchlässig und zerstreuend wie eine Platte aus weißem Kunststoff ist.

7. Vorrichtung (1) nach einem der vorhergehenden Ansprüche, wobei das Substrat (2) zwischen dem Prüfbild (10) und der Kamera (3) für eine Messung durch Übertragung angeordnet ist.

8. Vorrichtung (1) nach einem der vorhergehenden Ansprüche, umfassend einen Speicher, auf dem Programme aufgezeichnet sind, die ausgelegt sind, um:
- mit Hilfe der linearen Kamera ein lineares Bild durch Übertragung vom beleuchteten Prüfbild aufzunehmen, wobei das Substrat oder das Prüfbild in Verschiebung in Bezug zueinander gemäß einer einzigen Laufrichtung parallel zur Richtung der Defekte und der Linien des Prüfbilds sind;
- (1) die Pixellinie des linearen Bilds zu erfassen, das gemäß der großen Ausdehnung des Prüfbilds aufgenommen wurde, ohne die Kamera in Bezug auf das Prüfbild zu verschieben;
- (2) eine digitale Verarbeitung auf die erfasste Pixellinie anzuwenden, um für jedes Pixel eine repräsentative Größe der Wirkung des Substrats auf das von dem Substrat übertragene Licht zu berechnen, z. B. die optische Leistung jedes Pixels;
- (3) die Werte dieser Größe für jedes Pixel der Linie zu speichern und ein Bild der Pixellinie anzuzeigen, in dem die Farbe jedes Pixels für diese Größe repräsentativ ist;
- den Zyklus Erfassen-Verarbeiten-Anzeigen (1)(2)(3) mehrere Male auf periodische Weise zu wiederholen und die Bilder der Pixellinien zu stapeln, um das Bild eines Teils des Substrats wiederherzustellen;
- durch digitale Verarbeitung das wiederhergestellte Bild zu analysieren, um daraus die Position der Defekte abzuleiten und ihr Ausmaß zu quantifizieren.

9. Vorrichtung nach Anspruch 8, **dadurch gekennzeichnet, dass** der Zeitraum der Erfassung der Linien größer als die Dauer der Erfassung jeder Linie ist, z. B. um 0,1 Sekunden oder mehr.

## Claims

1. A device (1) for analyzing a transparent surface of a transparent substrate (2) comprising a reference pattern (10) formed on a support (11) facing the surface of the substrate to be measured, a camera (3) for capturing at least one image of the reference pattern distorted by the measured substrate, a reference pattern illumination system (4), and image processing/digital analysis means (5) which are connected to the camera (3), the support (11) being an oblong shape of short and long extents, the reference pattern being unidirectional and consisting of a pattern (10) that lies along the shorter extent of the support, the pattern (10) being periodic transverse to the short extent, **characterized in that** the camera is linear and positioned so as to obtain a linear image in transmission of the reference pattern through the substrate along the long extent of the support (11), **in that** the support (11) for the reference pattern (10) is mounted so as to move relative to the substrate (2) perpendicular to the plane in which the substrate (2) runs and **in that** the device comprises.

2. The device (1) as claimed in claim 1, in which the ratio of the long extent of the support (11) to the small extent of the support (11) is equal to or greater than 10, preferably equal to or greater than 20.

3. The device (1) as claimed in claim 1 or 2, in which the pattern (10) comprises at least one line which has, along the short extent of the support (11), a width of between 0.1 mm and 5 cm, preferably between 1 mm and 2 mm.

4. The device (1) as claimed in any one of the preceding claims, in which the pattern is composed of an alternating succession of light and dark lines.

5. The device (1) as claimed in any one of the preceding claims, in which the support (11) for the reference pattern consists of a panel backlit by the illumination system (4).

6. The device (1) as claimed in claim 5, in which the support (11) is, on its face turned towards the transparent susbtrate which is a glazing panel to be measured, translucent and diffusing, such as a white plastic sheet.

7. The device (1) as claimed in any one of the preceding claims, in which the substrate (2) is placed between the reference pattern (10) and the camera (3) for a measurement in transmission.

8. The device (1) as claimed in any one of the preceding claims, comprising a memory in which suitable programs are recorded for:
- using the linear camera, taking a linear image in transmission of the illuminated reference pattern, the substrate or the reference pattern moving, one relative to the other, along a single running direction parallel to the direction of the defects and to the lines of the reference pattern;
- (1) acquiring the row of pixels of the linear image taken along the long extent of the reference pattern, without moving the camera relative to the reference pattern;
- (2) applying digital processing to the acquired row of pixels in order to calculate a representative quantity, for each pixel, of the effect of the substrate on the light transmitted by the substrate, for example the optical power of each pixel;
- (3) storing in memory the values of this quantity for each pixel of the row, and displaying an image of the row of pixels in which the color of each pixel is representative of this quantity;
- repeating the acquisition/processing/display cycle (1)(2)(3) several times in a periodic manner and stacking the images of the rows of pixels so as to reconstruct the image of a part of the substrate; and
- analyzing the reconstructed image by digital processing so as to deduce therefrom the position of the defects and to quantify their gravity.

9. Device according to claim 8, **characterized in that** the row acquisition period is longer than the acquisition time for each row, for example 0.1 seconds or longer.
